# EUROPÄISCHE PATENTSCHRIFT

(11) **EP 2 146 812 B1**
(45) Veröffentlichungstag und Bekanntmachung des Hinweises auf die Patenterteilung: **16.05.2012**
(21) Anmeldenummer: 07846330.4
(22) Anmeldetag: 13.11.2007
(51) Int. Cl.: B23B 27/16, B23C 5/24

(54) **SPANABHEBENDES WERKZEUG**
METAL-CUTTING TOOL
OUTIL D'USINAGE PAR ENLÈVEMENT DE MATIÈRE

(30) Priorität: 13.11.2006 DE 202006017359 U
(43) Veröffentlichungstag der Anmeldung: 27.01.2010
(73) Patentinhaber: Gühring OHG, 72458 Albstadt (DE)
(72) Erfinder: MATHEIS, Klaus, 88605 Sauldorf/Rast (DE)
(74) Vertreter: Meitinger, Thomas Heinz
(86) Internationale Anmeldenummer: PCT/DE2007/002053
(87) Internationale Veröffentlichungsnummer: WO 2008/058524

(56) Entgegenhaltungen:
- EP-A- 0 499 280
- DE-A1- 2 235 782
- DE-A1- 19 800 440

## Beschreibung

Die Erfindung betriff ein spanabhebendes Werkzeug nach dem Oberbegriff des Anspruchs 1.

### Stand der Technik:

Es sind Ausführungsformen von Feinbearbeitungswerkzeugen mit Wendeschneidplatten bekannt, bei welchen die Wendeschneidplatte radial und axial über einen Werkzeugträger übersteht. Die radiale Position der Wendeschneidplatte kann bei dieser bekannten Ausführungsform über ein Justierelement in Form eines Keilelements verstellt werden, dass radial innenliegend hinter der Wendeschneidplatte positioniert ist. Dieses Keilelement wird mit einer Schraube senkrecht zur Längserstreckung des Werkzeugträgers positioniert, wobei eine schräge Fläche am Keilelement mit.einer entsprechend schräg verlaufenden Fläche an der Wendeschneidplatte zusammenwirkt und eine Art Keilgetriebe ausbildet, über welches die Radialpositionierung der Wendeschneidplatte erfolgt. Der "Feinheitsgrad" der Radialpositionierung wird durch die Neigung der Schrägflächen in Bezug auf eine flächige Erstreckung der Wendeschneidplatte bestimmt.

Bei der bekannten Ausführungsform ist die Schrägfläche an der Wendeschneidplatte in Bezug auf deren Flächenerstreckung negativ geneigt. Bei angebrachter Wendeschneidplatte ist dadurch das Justierelement geklemmt. Bei entfernter Wendeschneidplatte hingegen kann das Keilelement aus einer entsprechenden Ausnehmung im Werkzeugträger herausfallen. Diese Gefahr besteht immer, wenn die Wendeschneidplatte gedreht oder ausgewechselt wird.

Die Dokumente EP 0 499 280 A1, DE 22 35 782 A1 und DE 198 00 440 A1. beschreiben Justiervorrichtungen zur räumlichen Positionierung von Schneidplatten.

Ein Werkzeug nach dem Oberbegriff des Anspruchs 1 wird im DE 198 0044 OA1 offenbart.

### Aufgabe und Vorteile der Erfindung:

Der Erfindung liegt die Aufgabe zugrunde, die Handhabung eines spanabhebenden Werkzeugs der einleitend bezeichneten Art mit austauschbarer Schneidplatte zu verbessern.

Diese Aufgabe wird durch die Merkmale des Anspruchs 1 gelöst.

In den abhängigen Ansprüchen sind vorteilhafte Weiterbildungen der Erfindung beschrieben.

Die Erfindung geht von einem spanabhebenden Werkzeug aus, das einen Werkzeugträger, eine austauschbare Schneidplatte für einen Spanabtrag sowie ein über Schraubmittel angebrachtes Justierelement, insbesondere Keilelement umfasst, mit dem die Position der Schneidplatte am Werkzeugträger einstellbar ist. Der Kern der Erfindung liegt nun darin, dass die Schraubmittel ein mit dem Justierelement zusammenwirkendes Gewindeelement umfassen, wobei das Gewindeelement im Werkzeugträger, zumindest in axialer Richtung, lagefixiert ist. Dadurch kann das Justierelement am Werkzeugträger so angebracht werden, dass bei entfernter Wendeschneidplatte ein sicherer Halt des Justierelementes am Werkzeugträger, sozusagen als unverlierbares Teil, gewährleistet ist.

Das Werkzeug kann rotieren oder an einem rotierenden Werkstück eingerichtet werden.

Das Justierelement kann so ausgebildet sein, dass sich entweder die radiale oder axiale Position der Schneidplatte einstellen lässt. Es ist aber auch möglich ein Justierelement so auszubilden und/oder zu positionieren, dass sowohl die radiale als auch axiale Position der Schneidplatte in einem einzigen Justiervorgang eingestellt werden kann. Hierzu sind insbesondere Führungsflächen für die Schneidplatte entsprechend auszulegen. Außerdem sollte vorzugsweise das Justierelement sowohl eine radiale als auch axiale Kraftkomponente auf die Schneidplatte ausüben.

Außerdem ist es vorteilhaft, dass das Justierelement einen radialen Vorsprung aufweist, der in einen Rücksprung am Werkzeugträger eingreift. Durch diese Maßnahme lässt sich mit vergleichsweise wenig Aufwand eine Lagefixierung der Schraubmittel zusammen mit dem Justierelement am Werkzeugträger bewerkstelligen.

In einer besonders bevorzugten Ausgestaltung der Erfindung ist das Gewindeelement in Bezug auf eine Ausnehmung im Werkzeugträger, in welcher das Justierelement axial verschiebbar angeordnet ist, außermittig bzw. nicht koaxial positioniert. Durch diese Maßnahme kann eine Lagefixierung am Werkzeugträger besonders elegant gelöst werden. Das kann dann so aussehen, dass zunächst das Gewindeelement mit Vorsprung in eine Ausnehmung für das Justierelement am Werkzeugträger eingesetzt wird, so dass der Vorsprung in den Rücksprung eingreift. Anschließend wird das Justierelement durch Drehen des Schraubelements in die Ausnehmung eingesetzt. Bei eingesetztem Justierelement sind die Geometrien vorzugsweise derart festgelegt, dass der Vorsprung am Gewindeelement den Rücksprung am Werkzeugträger nicht mehr verlassen kann.

Vorzugsweise ist der Vorsprung am Gewindeelement als ein umlaufender Bund ausgestaltet. Der Bund kann einen Art Fuß ausbilden, der auf dem "Grund" der Ausnehmung lagert. Es ist jedoch auch denkbar, dass der Vorsprung zwischen den Enden irgendwo auf der Längserstreckung des Gewindeelements positioniert ist.

In einer überdies vorteilhaften Ausführungsform der Erfindung ist der Rücksprung als Freistich in der Ausnehmung für das Justierelement ausgebildet. Beispielsweise ist die Ausnehmung eine Bohrung im Werkzeugträger, an deren Fußpunkt über einen Teil des Umfangs eine Hinterschneiduhg im Form eines Freistiches herausgearbeitet ist. Das Gewindeelement läuft vorzugsweise nicht koaxial in Bezug auf einen Führungsabschnitt des Keilelements, der in einer Ausnehmung des Werkzeugträgers verschieblich angeordnet ist, im Justierelement. Dadurch lässt sich sicherstellen, dass bei eingesetztem Justierelement in der dafür vorgesehenen Ausnehmung der Vorsprung am Gewindeelement nicht mehr soweit aus dem Rücksprung der Ausnehmung ausrücken kann, dass das Gewindeelement und Justierelement herausnehmbar wären.

Für eine Befestigung von Gewindeelement und Justierelement ist es darüber hinaus bevorzugt, dass das Gewindeelement mit einem Gewindeabschnitt in einen entsprechenden Gewindeabschnitt am Justierelement eingreift. Vorzugsweise läuft das Gewindeelement im Justierelement. In einer überdies bevorzugten Ausgestaltung der Erfindung sind am Gewindeelement Betätigungsmittel vorgesehen, so dass von der Seite der austauschbaren Schneidplatte das Gewindeelement mit einem Werkzeug bedienbar ist. Beispielsweise ist ein Innensechskant, eine Torxaufnahme oder dergleichen vorgesehen.

Es ist jedoch auch denkbar, dass das Gewindeelement von einer der Schneidplatte gegenüberliegenden Seite aus bedienbar ist, beispielsweise durch eine Bohrung im Werkzeugträger. Diese Vorgehensweise hat den Vorteil, dass eine Ausnehmung für eine Werkzeugaufnahme am Gewindeelement einer vergleichsweise geringeren Verschmutzung beim Einsatz des spanabhebenden Werkzeugs ausgesetzt ist, da diese sozusagen im "Bearbeitungsschatten" liegt.

Im Weiteren ist es bevorzugt, wenn die Längsachse des Justierelements senkrecht zu einer Bodenfläche der Schneidplatte verläuft. Eine Anordnung des Justierelements in einem nicht rechten Winkel einer Bodenfläche der Schneidplatte ist jedoch auch möglich. Hierdurch lassen sich in Bezug auf eine Anlagefläche an der Schneidplatte günstige Einstellverhältnisse für die Schneidplatte erzielen, indem eine Anpassung der Ausrichtung der Längsachse des Justierelements zur Bodenfläche der Schneidplatte vorgenommen wird.

### Zeichnungen:

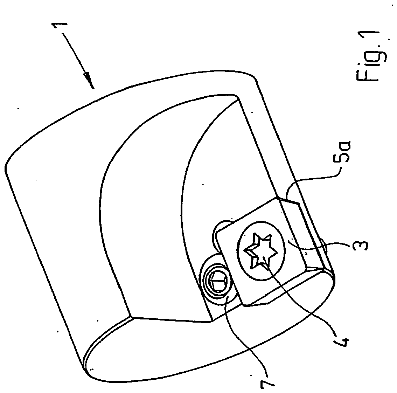

Ein Ausführungsbeispiel der Erfindung ist in den Zeichnungen dargestellt. Und unter Angabe weiterer Vorteile und Einzelheiten näher erläutert. Es zeigen
- Figur 1: in perspektivischer Ansicht den vorderen Teil eines Feinbearbeitungswerkzeugs mit Wendeschneidplatte,

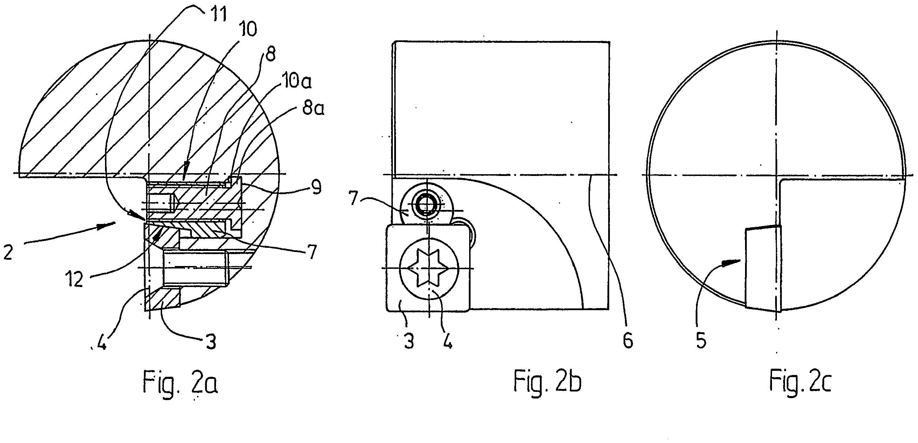

- Figuren 2a bis 2c: Den vorderen Teil eines Feinbearbeitungswerkzeugs gemäß Figur 1 in Seitenansicht (Figur 2b), einer Draufsicht (Figur 2c) sowie einer Schnittansicht (Figur 2a).

### Beschreibung des Ausführungsbeispiels:

In den Figuren ist der vordere Teile eines Feinbearbeitungswerkzeugs 1 dargestellt.

In einer in Draufsicht segmentförmigen Ausnehmung 2 ist eine Wendeschneidplatte 3 über eine Schraube 4 in einer Vertiefung 5 der Ausnehmung 2 montiert.

In einer Richtung entlang einer Längsachse 6 liegt die. Wendeschneidplatte 3 an einem festen Anschlag 5a der Vertiefung 5.

In radialer Richtung lässt sich die Wendeschneidplatte 3 über ein Keilelement 7 verstellten.

Hierzu wird eine Einstellschraube 8 mittels eines Innensechskants, die in ein passendes Innengewinde im Keilelement 7 eingeschraubt ist, verdreht.

Die Einstellschraube stützt sich an einem Boden 9 einer Ausnehmung 10 ab. In der Ausnehmung 10 wird ein passender zur Ausnehmung 10 ausgebildeter Teil des Keilelements 7 geführt.

Beim Verdrehen der Schraube 8 wird das Keilelement 7 entweder nach Innen in die Ausnehmung 10 oder entgegengesetzt aus dieser heraus verschoben.

Dabei gleitet eine entsprechend ausgestaltete Keilfläche 11 an einer dazu passenden Fläche 12 an der Wendeschneidplatte 3.

Die Flächen haben eine Neigung von z.B. 7 Grad zu einer Senkrechten auf einer Flächenerstreckung der Wendeschneidplatte 3.

Je kleiner dieser Winkel ist, desto feinfühliger lässt sich die Wendeschneidplatte radial einstellen, durch Verschieben des Keilelements 7 entlang der Flächen 11, 12.
Der Endbereich der Einstellschraube 8 weist einen Umlaufenden. Rand 8a auf.

Im eingesetzten Zustand von Keilelement und Einstellschraube sitzt der Rand 8a in einem Freistich 10a der Ausnehmung 10.

Dadurch wird es der Einstellschraube 8 unmöglich, selbst bei entfernter Wendeschneidplatte 3, wenn diese beispielsweise getauscht oder verdreht wird, aus der Ausnehmung 10 herauszufallen. Außerdem kann das Keilelement definiert sowohl heraus- als auch hineingedreht werden, da die Schraube 8 lagefixiert ist.

Um das Einführen des Randes 8a in den Freistich 10a zu ermöglichen, ist es bevorzugt, wenn die Einstellschraube 8 im Keilelement 7 exzentrisch in Bezug auf deren jeweiligen Längsachse verläuft:

Dementsprechend sitzt die Einstellschraube 8 auch exzentrisch in Bezug auf die Längserstreckung der Ausnehmung 10, in welcher das Keilelement 7 geführt ist.

Zum Einsetzen von Einstellschraube 8 und Keilelement 7 wird vorzugsweise die Einstellschraube 8 in der Ausnehmung 10 mit dem Rand 8a im Freistich 10a positioniert. Dann wird das Keilelement 7 aufgesetzt und durch Drehen der Einstellschraube 8 in die Ausnehmung 10 hineingezogen.

Anschließend kann dann wie bekannt die Wendeschneidplatte montiert und positioniert werden.

Durch den Freistich und den darin eingreifenden Rand 8a sind die Einstellorgane bestehend aus Keilelement 7 und Einstellschraube 8 unverlierbar in der Ausnehmung 10 angeordnet.

### Bezugszeichenliste:

- 1: Feinbearbeitungswerkzeug.
- 2: Ausnehmung
- 3: Wendeschneidplatte
- 4: Schraube
- 5: Vertiefung
- 5a: fester Anschlag
- 6: Längsachse
- 7: Keilelement.
- 8: Einstellschraube
- 8a: Rand
- 9: Boden
- 10: Ausnehmung
- 10a: Freistich
- 11: Keilfläche
- 12: Fläche

## Patentansprüche

1. Spanabhebendes Werkzeug (1) mit einem Werkzeugträger, einer austauschbaren Schneidplatte (3) für einen Spanabtrag sowie einem über Schraubmittel angebrachten Justierelement (7), mit dem die Position der Schneidplatte am Werkzeugträger einstellbar ist, wobei die Schraubmittel ein mit dem Justierelement (7) zusammenwirkendes Gewindeelement (8) umfassen, wobei das Gewindeelement (8) im Werkzeugträger lagefixiert ist, **dadurch gekennzeichnet, dass** das Gewindeelement (8) einen radialen Vorsprung (8a) aufweist, der in einen Rücksprung (10a) am Werkzeugträger eingreift.

2. Werkzeug nach Anspruch 1 oder 2, **dadurch gekennzeichnet, dass** das Gewindeelement (8) in Bezug auf eine Ausnehmung (10) im Werkzeugträger, in welcher das Justierelement (7) axial verschiebbar angeordnet ist, außermittig bzw. nicht koaxial positioniert ist.

3. Werkzeug nach einen der vorhergehenden Ansprüche, **dadurch gekennzeichnet, dass** der Vorsprung einen umlaufenden Bund (8a) umfasst.

4. Werkzeug nach einem der vorhergehenden Ansprüche, **dadurch gekennzeichnet, dass** der Rücksprung als Freistich (10a) in der Ausnehmung (10) für das Justierelement (7) ausgebildet ist.

5. Werkzeug nach einem der vorhergehenden Ansprüche, **dadurch gekennzeichnet, dass** das Gewindeelement (8) nicht koaxial in Bezug auf einen Führungsabschnitt des Justierelements (7), der in der Ausnehmung (10) des Werkzeugträgers verschieblich angeordnet ist, im Justierelement (7) verläuft.

6. Werkzeug nach einem der vorhergehenden Ansprüche, **dadurch gekennzeichnet, dass** das Gewindeelement (8) mit einem Gewindeabschnitt in einen entsprechenden Gewindeabschnitt am Justierelement (7) eingreift.

7. Werkzeug nach einem der vorhergehenden Ansprüche, **dadurch gekennzeichnet, dass** das Gewindeelement (8) im Justierelement (7) läuft.

8. Werkzeug nach einem der vorhergehenden Ansprüche, **dadurch gekennzeichnet, dass** der Vorsprung (8a) als Fuß ausgebildet ist.

9. Werkzeug nach einem der vorhergehenden Ansprüche, **dadurch gekennzeichnet, dass** der Vorsprung (8a) von den Enden des Gewindeelements (8) entfernt ausgebildet ist.

10. Werkzeug nach einem der vorhergehenden Ansprüche, **dadurch gekennzeichnet, dass** das Gewindeelement (8) von der Seite der austauschbaren Schneidplatte (3) mit einem Werkzeug betätigbar ist.

11. Werkzeug nach einem der vorhergehenden Ansprüche, **dadurch gekennzeichnet, dass** das Gewindeelement (8) von einer der Schneidplatte (3) gegenüberliegenden Seite mit einem Werkzeug bedienbar ist.

12. Werkzeug nach einem der vorhergehenden Ansprüche, **dadurch gekennzeichnet, dass** eine Längsachse des Justierelements (7) senkrecht zu einer Bodenfläche der Schneidplatte (3) verläuft.

13. Werkzeug nach einem der vorhergehenden Ansprüche, **dadurch gekennzeichnet, dass** eine Längsachse des Justierelements (7) in einem nicht rechten Winkel zu einer Bodenfläche der Schneidplatte (3) -steht.

## Claims

1. Metal-cutting tool (1) with a tool carrier, an interchangeable cutting tip (3) for chip removal and an adjusting unit (7) attached by means of screwing devices, with which the position of the cutting tip on the tool carrier can be adjusted, wherein the screwing devices comprise a thread unit (8) interacting with the adjusting unit (7), wherein the thread unit (8) is locked into position in the tool carrier , **characterized by** the thread unit (8) having a radial male face (8a) engaging in a female face (10a) in the tool carrier.

2. Tool according to claim 1 or 2, **characterized by** the thread unit (8) being positioned eccentrically or not coaxially in relation to a recess (10) in the tool carrier, in which the adjusting unit (7) is located in an axially movable way.

3. Tool according to any one of the previous claims, **characterized by** the male face comprising a circumferential collar (8a).

4. Tool according to any one of the previous claims, **characterized by** the female face being embodied as an undercut (10a) in the recess (10) for the adjusting unit (7).

5. Tool according to any one of the previous claims, **characterized by** the thread unit (8) not running coaxially in the adjusting unit (7) in relation to a guiding section of the adjusting unit (7), which is located in the recess (10) of the tool carrier in a slidable way.

6. Tool according to any one of the previous claims, **characterized by** the thread unit (8) engaging with a portion of a thread in a corresponding portion of a thread in the adjusting unit (7).

7. Tool according to any one of the previous claims, **characterized by** the thread unit (8) running inside the adjusting unit (7) .

8. Tool according to any one of the previous claims, **characterized by** the male face (8a) being embodied as a toe.

9. Tool according to any one of the previous claims, **characterized by** the male face (8a) being embodied distant from the ends of the thread unit (8).

10. Tool according to any one of the previous claims, **characterized by** the thread unit (8) being operated from the side of the interchangeable cutting tip (3) with a tool.

11. Tool according to any one of the previous claims , **characterized by** the thread unit (8) being operated from the side opposite of the cutting tip (3) with a tool.

12. Tool according to any one of the previous claims, **characterized by** a longitudinal axis of the adjusting unit (7) running perpendicular to a bottom surface of the cutting tip (3).

13. Tool according to any one of the previous claims, **characterized by** a longitudinal axis of the adjusting unit (7) being in an angle other than a right angle to a bottom surface of the cutting tip (3).

## Revendications

1. Outil à enlèvement de copeaux (1) doté d'un porte-outil, d'une plaque de coupe (3) amovible pour une évacuation de copeaux et d'un élément d'ajustage (7) placé à l'aide de moyens de vissage, avec lequel la position de la plaque de coupe peut être réglée sur le porte-outil, les moyens de vissage comprenant un élément fileté (8) coopérant avec l'élément d'ajustage (7), l'élément fileté (8) étant fixé dans le porte-outil, **caractérisé en ce que** l'élément fileté (8) présente une partie saillante (8a) radiale, qui s'engage dans un décrochement (10a) sur le porte-outil.

2. Outil selon la revendication 1 ou 2, **caractérisé en ce que** l'élément fileté (8) est positionné de façon excentrée ou non coaxiale par rapport à un évidement (10) dans le porte-outil, dans lequel l'élément d'ajustage (7) est disposé de façon à pouvoir coulisser axialement.

3. Outil selon l'une des revendications précédentes, **caractérisé en ce que** la partie saillante comprend une collerette périphérique (8a).

4. Outil selon l'une des revendications précédentes, **caractérisé en ce que** le décrochement est conçu sous forme de rainure de dégagement (10a) dans l'évidement (10) pour l'élément d'ajustage (7).

5. Outil selon l'une des revendications précédentes, **caractérisé en ce que** l'élément fileté (8) n'est pas agencé dans l'élément d'ajustage (7) de façon coaxiale par rapport à un tronçon de guidage de l'élément d'ajustage (7), qui est disposé de façon coulissante dans l'évidement (10) du porte-outil.

6. Outil selon l'une des revendications précédentes, **caractérisé en ce que** l'élément fileté (8) s'engage avec un tronçon fileté dans un tronçon fileté correspondant sur l'élément d'ajustage (7).

7. Outil selon l'une des revendications précédentes, **caractérisé en ce que** l'élément fileté (8) passe dans l'élément d'ajustage (7).

8. Outil selon l'une des revendications précédentes, **caractérisé en ce que** la partie saillante (8a) est conçue comme pied.

9. Outil selon l'une des revendications précédentes, **caractérisé en ce que** la partie saillante (8a) est conçue à distance des extrémités de l'élément fileté (8).

10. Outil selon l'une des revendications précédentes, **caractérisé en ce que** l'élément fileté (8) peut être actionné avec un outil à partir du côté de la plaque de coupe (3) amovible.

11. Outil selon l'une des revendications précédentes, **caractérisé en ce que** l'élément fileté (8) peut être commandé avec un outil à partir d'un côté faisant face à la plaque de coupe (3).

12. Outil selon l'une des revendications précédentes, **caractérisé en ce qu'**un axe longitudinal de l'élément d'ajustage (7) est agencé perpendiculairement à une surface de fond de la plaque de coupe (3).

13. Outil selon l'une des revendications précédentes, **caractérisé en ce qu'**un axe longitudinal de l'élément d'ajustage (7) est disposé dans un angle non droit par rapport à une surface de fond de la plaque de coupe (3).
